# EUROPÄISCHE PATENTSCHRIFT

(11) **EP 3 960 352 B1**
(45) Veröffentlichungstag und Bekanntmachung des Hinweises auf die Patenterteilung: **30.10.2024**
(21) Anmeldenummer: 20193718.2
(22) Anmeldetag: 31.08.2020
(51) Int. Cl.: B23K 9/095, B23K 9/12, B23K 9/127, B23K 9/173

(54) **POSITIONSREGELUNG EINES TANDEMSCHWEISSKOPFS**
POSITION CONTROL FOR A TANDEM WELDING HEAD
RÉGLAGE DE LA POSITION D'UNE TÊTE DE SOUDAGE TANDEM

(43) Veröffentlichungstag der Anmeldung: 02.03.2022
(73) Patentinhaber: Fronius International GmbH, 4643 Pettenbach (AT)
(72) Erfinder: Söllinger, Dominik, 4600 Wels-Thalheim (AT)
(74) Vertreter: Patentanwälte Pinter & Weiss OG

(56) Entgegenhaltungen:
- EP-A1- 0 193 864
- EP-A2- 1 077 102
- DE-A1- 2 546 221
- DE-A1- 2 546 894
- US-A1- 2015 122 788

## Beschreibung

Die gegenständliche Offenbarung betrifft ein Verfahren zur Ermittlung eines Horizontalregelsignals für einen Tandemschweißkopf während der Herstellung einer Schweißnaht, welcher entlang einer Nahtfuge geführt wird und zwei nebeneinander angeordnete Brennereinheiten aufweist, wobei jede Brennereinheit eine Zuführung für einen Schweißdraht aufweist, wobei die erste Brennereinheit mit einem ersten Brennerabstand über einer ersten Fugenfläche an einer ersten Seite einer Nahtfugenmitte der Nahtfuge geführt wird, wobei die zweite Brennereinheit mit einem zweiten Brennerabstand über einer zweiten Fugenfläche an einer zweiten Seite der Nahtfugenmitte geführt wird, wobei ein erster Lichtbogen während eines ersten Schweißzyklus von der ersten Brennereinheit zu der Nahtfuge aufrechterhalten wird, wobei ein zweiter Lichtbogen während eines zweiten Schweißzyklus von der zweiten Brennereinheit zu der Nahtfuge aufrechterhalten wird, wobei für die erste Brennereinheit ein für den ersten Brennerabstand repräsentatives erstes Messsignal ermittelt wird, wobei für die zweite Brennereinheit ein für den zweiten Brennerabstand repräsentatives zweites Messsignal ermittelt wird und wobei die Ermittlung des Horizontalregelsignals das Bilden einer Differenz aus dem ersten Messsignal und dem zweiten Messsignal umfasst. Die Erfindung betrifft weiters ein Schweißverfahren zum Herstellen einer Schweißnaht entlang einer Nahtfuge mit einem Tandemschweißkopf und eine Schweißvorrichtung mit einem Tandemschweißkopf.

Verglichen mit herkömmlichen Eindraht-Schweißköpfen ermöglicht die Verwendung von Schweißköpfen mit zwei Drahtzuführungen eine erhebliche Erhöhung der Schweißgeschwindigkeit und der Abschmelzleistung. Dabei wird allgemein zwischen Doppeldraht-Schweißköpfen, bei denen beide Schweißdrähte mit derselben Stromquelle gespeist werden, und Tandemschweißköpfen, bei denen jeder der beiden Drähte von einer eigenen Stromquelle versorgt wird, unterschieden. Beim Tandemschweißkopf können die beiden Stromquellen unabhängig voneinander geregelt werden, wobei die Regelung in einer aufeinander abgestimmten Weise erfolgt. Dies verbessert insbesondere die erzielbare Qualität der Schweißnaht.

EP 0 193 864 A1 bildet die Basis für den Oberbegriff des Anspruchs 1 und 7 offenbart einen Doppeldraht-Schweißkopf mit zwei Elektroden, der entlang einer Fuge zwischen einem senkrechten Bauteil und einem waagrechten Bauteil bewegt wird. Aus den Schweißströmen und -spannungen der Elektroden wird jeweils eine mittlere Lichtbogen-Impedanz ermittelt, die proportional zum Elektrodenabstand ist. Aus den ermittelten Lichtbogen-Impedanzen wird eine Differenz gebildet, welche als Horizontalregelsignal verwendet werden kann.

DE 25 46 894 A1 offenbart ein Tandemschweißverfahren mit zwei Elektroden, wobei über jeweils einen Messwiderstand eine stromproportionale Spannung gemessen wird. Die Differenz der gleichgerichteten Spannungen ist ein Maß für die Mittenabweichung und kann für die Steuerung eines Motors zur Verstellung des Schweißbrenners verwendet werden.

DE 25 46 221 A1 offenbart ein Tandemschweißverfahren mit zwei Elektroden, wobei mittels Meßshunts die Teilströme der Drahtelektroden gemessen werden und wobei eine Differenz der Teilströme als Maß für die Abweichung des Brenners aus der Fugenmitte verwendet wird. Die Abweichung kann zur Ansteuerung des Motors für die seitliche Bewegung des Brennerschlittens verwendet werden, um eine automatische Rückstellung des Brenners in Fugenmitte zu ermöglichen.

Die gegenständliche Offenbarung hat das Ziel, Vorrichtungen und Verfahren bereitzustellen, mit denen einerseits die erzielbare Schweißnahtqualität weiter erhöht wird und mit denen andererseits weitere Einsatz- und Konfigurationsmöglichkeiten von Tandemschweißköpfen ermöglicht werden.

Diese und weitere Ziele werden gemäß der gegenständlichen Offenbarung in einem ersten Aspekt mit dem eingangs genannten Verfahren dadurch erzielt, dass der erste Lichtbogen während des ersten Schweißzyklus zeitweise aufrechterhalten wird und der zweite Lichtbogen während des zweiten Schweißzyklus zeitweise aufrechterhalten wird, wobei das erste Messsignal während eines definierten stabilen Zeitintervalls im ersten Schweißzyklus ermittelt wird und das zweite Messsignal während eines definierten stabilen Zeitintervalls im zweiten Schweißzyklus ermittelt wird und dass die erste Brennereinheit gemäß einem ersten Schweißprozess betrieben wird und die zweite Brennereinheit gemäß einem zweiten Schweißprozess betrieben wird, wobei der erste Schweißprozess und der zweite Schweißprozess unabhängig voneinander ausgewählt sind aus Schutzgasschweißen mit inerten oder aktiven Gasen (etwa MIG/MAG-Schweißen) mit Kurzlichtbogen oder Impulslichtbogen, Cold-Metal-Transfer-Schweißen (CMT-Schweißen) und Wolfram-Inertgas-Schweißen (WIG- Schweißen ), wobei die zwei Brennereinheiten mit unterschiedlichen Schweißprozessen betreibbar sind oder sich der erste Schweißzyklus und der zweite Schweißzyklus voneinander unterscheiden.

Mithilfe des Horizontalregelsignals ist eine sehr exakte Positionierung des Tandemschweißkopfes gegenüber der Nahtfuge möglich. Eine Pendelbewegung, wie sie bei bekannten Nahtsuchverfahren verwendet wird, ist hier nicht erforderlich. Dies erlaubt die Realisierung deutlich schnellerer Schweißgeschwindigkeiten.

Als "Tandemschweißkopf" wird im Zusammenhang mit der gegenständlichen Offenbarung jegliche Schweißbrenneranordnung bezeichnet, bei der zumindest zwei Brennereinheiten in einer fixen Anordnung zueinander gemeinsam bewegbar sind, um zur Herstellung einer einzelnen Schweißnaht zusammenzuwirken, wobei die Stromquellen der beiden Brennereinheiten unabhängig voneinander in einer aufeinander abgestimmten Weise regelbar sind. Als Tandemschweißkopf gilt somit im Sinne der gegenständlichen Offenbarung beispielsweise auch ein Schweißkopf mit mehr als zwei Drahtzuführungen und/oder mit mehr als zwei Lichtbögen, sofern zumindest zwei Brennereinheiten unabhängig voneinander regelbar sind. Andererseits gelten auch zwei oder mehr an sich unabhängige Brennerköpfe, die beispielsweise von zwei oder mehr Robotern in der Weise eines Tandemschweißkopfes geführt und entsprechend geregelt werden, als Tandemschweißkopf im Sinne der gegenständlichen Offenbarung.

Als "Schweißzyklus" wird im Zusammenhang mit der gegenständlichen Offenbarung eine sich periodisch wiederholende Abfolge bezeichnet, mit der Schweißparameter einer Brennereinheit während des Schweißprozesses verändert werden. Die periodischen Veränderungen können beispielsweise, ohne darauf beschränkt zu sein, den Schweißstrom betreffen (wie beim Impulsschweißen) oder den Drahtvorschub.

Als "Brennerabstand" wird im Zusammenhang mit der gegenständlichen Offenbarung insbesondere die Entfernung der "Spitze" der Brennereinheit zur darunterliegenden Fugenfläche bezeichnet. Dies entspricht bei nicht abschmelzenden Elektroden im Wesentlichen der Länge des Lichtbogens zwischen der nicht abschmelzenden Elektrode und dem Werkstück, bei abschmelzenden Elektroden der Länge des Lichtbogens plus der Länge der aus der Brennereinheit frei herausragenden Schweißdrahtspitze.

In vorteilhafter Weise können das erste Messsignal und das zweite Messsignal als ein für den Schweißstrom oder die Schweißspannung oder den Schweißwiderstand der jeweiligen ersten bzw. zweiten Brennereinheit repräsentatives Signal ermittelt werden. Dies ist mit geringem Aufwand realisierbar.

Erfindungsgemäß unterscheiden sich der erste Schweißzyklus und der zweite Schweißzyklus voneinander . Einerseits erlaubt dies eine zeitversetzte Impulssteuerung bei den beiden Brennereinheiten, andererseits können die beiden Brennereinheiten auch gemäß der Erfindung unterschiedlichen Schweißprozessen betrieben werden. Bei einer zeitversetzen Impulssteuerung könnten die beiden Impulszyklen zueinander synchronisiert und gegebenenfalls zeitversetzt erfolgen. Im Falle versetzter Impulszyklen kann auch die Signalgenerierung des Messsignals zueinander synchronisiert sein. Beispielsweise kann das Messsignal bei einer Impulssteuerung am Ende jeder Pulsphase erzeugt werden, wo der Lichtbogen stabil brennt. Auf diese Weise lassen sich auch Messignale von zwei unterschiedlichen Brennerköpfen, die in einem Tandemschweißkopf angeordnet sein können, miteinander in Einklang bringen.

In einer vorteilhaften Ausführungsform kann aus dem ersten Messsignal und dem zweiten Messsignal weiters ein Vertikalregelsignal ermittelt werden, wobei die Ermittlung des Vertikalregelsignals das Bilden einer Summe aus dem ersten Messsignal und dem zweiten Messsignal umfasst. Dadurch lässt sich ohne zusätzlichen Messaufwand auch eine Höhenregelung des Tandemschweißkopfes realisieren. Gegebenenfalls kann es auch ausreichend sein, ein Vertikalregelsignal aus dem Messsignal von nur einem der beiden Brennereinheiten auszuwerten, um ein Vertikalregelsignal zu erstellen.

In einem weiteren Aspekt betrifft die gegenständliche Offenbarung ein Schweißverfahren zum Herstellen einer Schweißnaht entlang einer Nahtfuge mit einem Tandemschweißkopf, wobei mit einem Verfahren gemäß den hierin offenbarten Lehren ein Horizontalregelsignal ermittelt und als ein Rückführungssignal einer Regelkomponente einer Schweißkopfsteuerung zur Verfolgung der Nahtfuge verwendet wird. Mit einem solchen Schweißverfahren lassen sich hochpräzise Schweißnähte bei sehr hohen Schweißgeschwindigkeiten erzielen.

In vorteilhafter Weise kann der Tandemschweißkopf in einer in Bezug auf die Nahtfugenmitte definierten Position oberhalb einer Tangentialfläche der Werkstückoberfläche, in der die Nahtfuge verläuft, angeordnet und entlang der Nahtfuge geführt werden, wobei ein Schweißkopfwinkel zwischen einer Normalprojektion einer gedachte Verbindungslinie durch die beiden Brennereinheiten auf die Tangentialfläche und der Nahtfugenmitte 10° bis 170°beträgt, wobei der Schweißkopfwinkel vorzugsweise etwa 90° +/- 10° beträgt. Mit einem "quergestellten" Tandemschweißkopf (d.h. bei einem Schweißkopfwinkel von etwa 90° +/-10°) lassen sich besonders breite Schweißnähte bearbeiten. Durch die Einstellung spitzerer Winkel (beispielsweise 10° bis 75° bzw. 105° bis 170°) lässt sich der Tandemschweißkopf an Nahtfugen mit unterschiedlichen Breiten und Formen anpassen. Die Verbindungslinie wird vorzugsweise durch die Punkte der Brennereinheiten gezogen, von denen der Lichtbogen ausgeht. Dies ist insbesondere bei abschmelzenden Elektroden die Drahtspitze und bei nicht abschmelzenden Elektroden die Elektrodenspitze.

In einem weiteren Aspekt betrifft die gegenständliche Offenbarung eine Schweißvorrichtung, die einen Tandemschweißkopf mit zwei nebeneinander angeordneten Brennereinheiten und zumindest eine Schweißkopfsteuerung aufweist, wobei die Schweißkopfsteuerung eine Steuereinheit zur gesteuerten Führung der Position des Tandemschweißkopfs entlang eines Soll-Verlaufs einer Nahtfuge und eine Regeleinheit zur geregelten Feinpositionierung des Tandemschweißkopfs gegenüber der Ist-Position der Nahtfuge aufweist. Die Regeleinheit verwendet ein Horizontalregelsignal, welches gemäß einem hierin offenbarten Verfahren ermittelt wird.

In vorteilhafter Weise kann die Regeleinheit ein Vertikalregelsignal verwenden, welches gemäß einem hierin offenbarten Verfahren ermittelt wird.

Erfindungsgemäß ist die erste Brennereinheit gemäß einem ersten Schweißprozess betreibbar und die zweite Brennereinheit gemäß einem zweiten Schweißprozess betreibbar , wobei der erste Schweißprozess und der zweite Schweißprozess unabhängig voneinander ausgewählt sind aus Schutzgasschweißen mit inerten oder aktiven Gasen (etwa MIG/MAG-Schweißen) mit Kurzlichtbogen, Impulslichtbogen, Cold-Metal-Transfer-Schweißen (CMT-Schweißen) und Wolfram-Inertgas-Schweißen (WIG- Schweißen ), wobei die zwei Brennereinheiten mit unterschiedlichen Schweißprozessen betreibbar sind oder sich der erste Schweißzyklus und der zweite Schweißzyklus voneinander unterscheiden.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig. 1 eine schematisierte schaubildliche Darstellung einer Tandem-Schweißvorrichtung mit einem über einer Nahtfuge angeordneten Tandemschweißkopf,
Fig. 2a eine schematische Draufsicht auf eine Anordnung des Tandemschweißkopfs über einer Nahtfuge mit einem skizzierten Bewegungsverlauf,
Fig. 2b ein schematisches Diagramm der Schweißdrahtströme bei dem in Fig. 2a dargestellten Bewegungsverlauf,
Fig. 2c ein schematisches Diagramm der Schweißwiderstände bei dem in Fig. 2a dargestellten Bewegungsverlauf,
Fig. 3a eine schematische Schnittansicht eines Tandemschweißkopfes über einer Nahtfuge, wobei die Schnittachse durch die Nahtfugenmitte verläuft, mit einem skizzierten Bewegungsverlauf,
Fig. 3b ein schematisches Diagramm der Schweißdrahtströme bei dem in Fig. 2a dargestellten Bewegungsverlauf,
Fig. 4 eine schematische Darstellung eines Tandemschweißkopfs, der einem gekrümmten Verlauf einer Nahtfuge folgt.

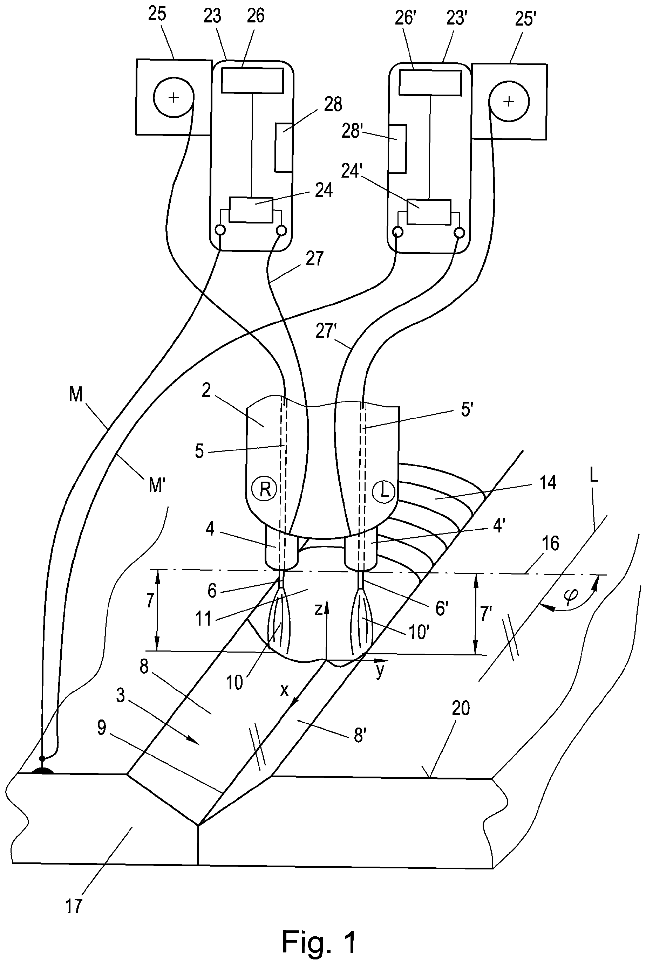

Fig. 1 zeigt eine schematische schaubildliche Darstellung einer Tandem-Schweißvorrichtung mit einem Tandemschweißkopf 2, der über einer Nahtfuge 3 an einem Werkstück 17 angeordnet ist, sich entlang dieser bewegt und dabei eine Schweißnaht 14 erzeugt. Die beispielhaft dargestellte Tandem-Schweißvorrichtung weist zwei separate Schweißgeräte 23, 23' mit jeweils einer Stromquelle 24, 24`, einer Steuereinheit 26, 26' und einer Schweißdrahtvorschubeinheit 25, 25' auf.

Der Tandemschweißkopf 2 weist eine erste Brennereinheit 4 und eine parallel dazu angeordnete zweite Brennereinheit 4' auf. Gegebenenfalls können die beiden Brennereinheiten 4, 4' auch unter einem Winkel zueinander angeordnet sein, sodass die Schweißdrähte 5, 5' nicht-parallel zueinander sind. Über die erste Brennereinheit 4 wird ein erster Schweißdraht 5 in den Bereich der Nahtfuge 3 mit einer geregelten Geschwindigkeit vorgeschoben und mit der zweiten Brennereinheit 4' wird ein zweiter Schweißdraht 5' in den Bereich der Nahtfuge 3 mit einer geregelten Geschwindigkeit vorgeschoben. Die Nahtfuge 3 kann gegebenenfalls einer V-Naht, Halb-V-Naht, Kehlnaht oder einer anderen vergleichbaren Naht (z.B. Nahtfuge mit seitlichen Erhöhungen) entsprechen. Die Vorschubgeschwindigkeit des jeweiligen Schweißdrahtes 5, 5' ist für jede Brennereinheit 4 getrennt und unabhängig voneinander regelbar, wobei gegebenenfalls auch eine Zurückbewegung der Schweißdrahtenden 6, 6' möglich sein kann.

Jede Brennereinheit 4, 4' ist mit einer Stromquelle 24, 24' verbunden, mit der ein Schweißstrom bzw. eine Schweißspannung auf den Schweißdraht 5, 5` (oder im Falle des WIG-Schweißens auf eine nicht abbrennende Elektrode) aufgebracht werden kann. Dazu ist je Brennereinheit 4, 4' beispielsweise eine Kontakthülse bzw. Kontaktrohr vorgesehen, welches mit einer Schweißleitung 27, 27'verbunden ist. Damit fließt bei Kontakt von Kontaktrohr und Schweißdraht ein bestimmter Schweißstrom über die Schweißelektrode bzw. hier den Schweißdraht 5, 5`, wobei hierfür natürlich in bekannter Weise auch eine Masseleitung M, M' mit dem Werkstück 17 verbunden ist, sodass der Schweißstromkreis geschlossen ist.

Entsprechend dem jeweiligen Schweißprozess bildet sich zwischen dem ersten Schweißdrahtende 6 des Schweißdrahts 5 der ersten Brennereinheit 4 und dem zweiten Schweißdrahtende 6` des zweiten Schweißdrahts 5' der zweiten Brennereinheit 4` jeweils ein erster Lichtbogen 10 und ein zweiter Lichtbogen 10` aus, wobei die Schweißdrähte 5, 5` im dargestellten Fall jeweils mit der Stromquelle 24, 24' verbunden sind und als abschmelzende Elektroden dienen. Der Schweißdraht 5, 5' kann der Brennereinheit 4, 4' von der jeweiligen Schweißdrahtvorschubeinheit 25, 25' jeweils mit einer bestimmten Schweißdrahtvorschubgeschwindigkeit zugeführt werden. Die Schweißdrahtvorschubeinheit 25, 25' kann jeweils im Schweißgerät 23, 23' integriert sein, kann aber auch eine separate Einheit sein, wie in Fig.1 dargestellt. Die Schweißgeräte 23, 23`, gegebenenfalls auch mit den jeweiligen Schweißdrahtvorschubeinheiten 25, 25' könnten natürlich auch in einem gemeinsamen Gehäuse angeordnet sein. Der Schweißdraht 5, 5' und die Schweißleitung 27, 27' eines Schweißgerätes 23, 23' (und gegebenenfalls auch weitere Leitungen wie beispielsweise eine Steuerleitung, eine Leitung für ein Schutzgas oder eine Kühlmittelleitung) können auch in einem gemeinsamen, oder auch mehreren, (nicht dargestellten) Schlauchpaket/en geführt sein. Das Schlauchpaket kann an den Tandemschweißkopf 2 und an das jeweilige Schweißgerät 23, 23' über geeignete Kupplungen angekoppelt werden.

In den Schweißgeräten 23, 23' ist auch jeweils eine Steuereinheit 26, 26` vorgesehen, die den mit dem jeweiligen Schweißgerät 23, 23' durchgeführten Schweißprozess steuert und überwacht. Die Steuereinheit 26, 26`steuert dabei beispielsweise die Stromquellen bzw. Leistungsteile 24, 24` zur Erzeugung des Schweißstromes. Hierfür können in der Steuereinheit 26, 26' benötigte Schweißparameter für den durchzuführenden Schweißprozess vorgegeben oder einstellbar sein, beispielswiese eine Impulsfrequenz, eine Schweißdrahtvorschubgeschwindigkeit, ein Impulsstrom und Grundstrom, eine Impulsstromdauer, Grundstromdauer, Anstiegs- / Abfallszeiten der Stromflanken eines Impulsschweißprozesses, etc. Zur Eingabe oder zur Anzeige gewisser Schweißparameter oder eines Schweißstatus kann am Schweißgerät 23, 23' auch eine Eingabe-/Ausgabeeinheit 28, 28' vorgesehen sein. Natürlich ist die dargestellte Tandem-Schweißvorrichtung nur beispielhaft zu verstehen und könnte auch anders ausgestaltet sein. Zur Durchführung eines Mehrfach-Schweißverfahrens mit mehr als zwei Elektroden bzw. Schweißdrähten sind natürlich entsprechend mehr Schweißgeräte vorgesehen, z.B. ein (nicht dargestelltes) drittes Schweißgerät, usw.

Der Tandemschweißkopf 2 ist dabei im Wesentlichen vollständig "quer" zur Nahtfuge 3 angeordnet, d.h., dass ein Schweißkopfwinkel ϕ zwischen einer gedachten Verbindungslinie 16, welche die beiden Schweißdrahtenden 6, 6` bzw. Kontaktrohrenden verbindet, und einer Ebene durch eine Nahtfugenmitte 9 im Wesentlichen 90° beträgt. Die Nahtfuge 3 bildet zu beiden Seiten der Nahtfugenmitte 9 jeweils eine erste und eine zweite Fugenfläche 8, 8' aus, wobei die erste Brennereinheit 4 der ersten Fugenfläche 8 zugeordnet ist und die zweite Brennereinheit 4' der zweiten Fugenfläche 8` zugeordnet ist. Somit bewegen sich die beiden Lichtbögen 10, 10' im Wesentlichen parallel zueinander entlang der Nahtfuge 3, wobei das werkstücknahe Ende des ersten Lichtbogens 10 in der ersten Fugenfläche 8 mündet und das werkstücknahe Ende des zweiten Lichtbogens 10` in der zweiten Fugenfläche 8' mündet.

Im Zusammenhang mit der gegenständlichen Offenbarung wird die Position des Tandemschweißkopfes 2 in Bezug auf ein mit der Nahtfuge 3 mitbewegtes Koordinatensystem beschrieben, dessen x-Achse parallel zu der Nahtfugenmitte 9 angeordnet ist, dessen x-y-Ebene parallel zu einer Tangentialebene einer Werkstückoberfläche 20 (im Schnittpunkt zur z-Achse) angeordnet ist, und dessen z-Achse die Verbindungslinie 16 schneidet. Diese Definition ist nicht einschränkend und wurde rein aus Gründen der Vereinfachung des Verständnisses und der Beschreibung gewählt. Sofern im Text nicht ausdrücklich etwas anderes angegeben ist, beziehen sich Lageangaben, wie etwa "vertikal", "oben", "unten", "oberhalb", "unterhalb", etc., auf die z-Achse. Lageangaben, wie etwa "seitlich", "rechts", "links", "neben", etc., beziehen sich auf die y-Achse ("Rechts" und "Links" werden dabei durch die Vorschubrichtung definiert). Lageangaben, wie etwa "vorwärts", "rückwärts", "vor", "hinter", etc. beziehen sich auf die x-Achse. Lageangaben, wie etwa "horizontal", beziehen sich auf die x-y-Ebene. Sofern im Text nicht ausdrücklich auf etwas anderes hingewiesen wird, werden diese Lageangaben unabhängig von der tatsächlichen Ausrichtung der Nahtfuge 3 im Raum verwendet.

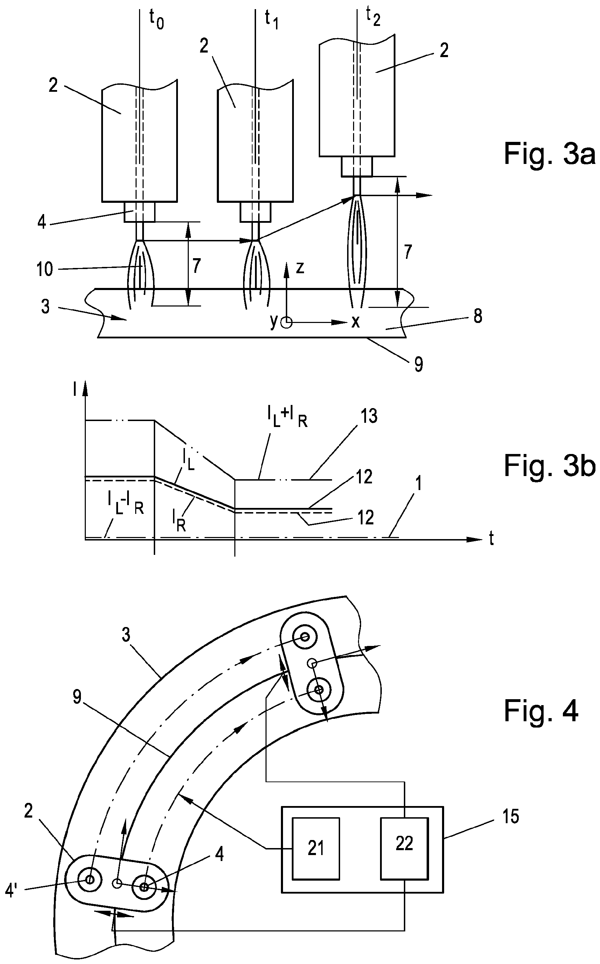

Während des Schweißvorgangs wird der Tandemschweißkopf 2 entlang einer Schweißrichtung 18 parallel zur Nahtfuge 3 bewegt, beispielsweise mittels einer geeigneten Schweißkopfsteuerung 15, wie z.B. einem Roboterarm eines Schweißroboters (Fig.4). Dabei wird im Bereich der beiden Lichtbögen 10, 10' das Material des Werkstücks 17 erwärmt. Gleichzeitig schmelzen (bei der Verwendung abschmelzender Elektroden, wie etwa beim MIG/MAG-Schweißen) die Schweißdrähte 5, 5' an den Schweißdrahtenden 6, 6` ab und tropfen in ein Schweißbad 11, welches beim Aushärten die Schweißnaht 14 ausbildet. Bei der Verwendung nicht abschmelzender Elektroden (insbesondere beim WIG-Schweißen) wird der Lichtbogen bekanntermaßen zwischen der Elektrode und dem Schweißbad aufrechterhalten und der Zusatzwerkstoff unabhängig von der Elektrode zugeführt.

Durch die kombinierte Energie der beiden Lichtbögen 10, 10' könnten deutlich höhere Schweißgeschwindigkeiten und Abschmelzraten erzielt werden, als dies bei herkömmlichen Schweißverfahren möglich ist. Dabei muss jedoch die Positionierung des Tandemschweißkopfs 2 sehr exakt auf die Nahtfuge 3 geregelt werden, da bei der hohen Schweißgeschwindigkeit bereits kleine Abweichungen von der Optimallinie eine erhebliche Verschlechterung der Schweißnaht bewirken. Zur Positionierung des Tandemschweißkopfs 2 und der Führung entlang der Nahtfuge 3 werden üblicherweise eine Steuerungsverfahren und ein Regelungsverfahren kombiniert angewendet. Die Steuerung kann beispielsweise den Tandemschweißkopf 2 entlang eines zuvor gelernten oder programmierten Verlaufs bewegen, etwa mithilfe eines Roboterarms, auf dem der Tandemschweißkopf 2 angeordnet ist. Die "Feinpositionierung" erfolgt über eine Regelung auf Basis von Regelsignalen, die beispielsweise anhand einer Messung des Schweißstroms, des Schweißwiderstands oder der Schweißspannung ermittelt werden können.

Bei Eindraht-Schweißköpfen ist zur Nahtverfolgung ein Verfahren bekannt, das auf einer periodischen horizontalen Pendelbewegung des Schweißkopfes basiert. Dabei wird der Verlauf des Schweißstroms (bzw. der Schweißspannung oder des Schweißwiderstandes) ermittelt und zur Positionsregelung ausgewertet. Bei Eindraht-Schweißgeräten funktioniert dies sehr einfach, indem die mittige Position der Pendelbewegung (entlang der y-Achse) auf ein Schweißstromminimum geregelt wird, was dem tiefsten Punkt der Nahtfuge 3, also der Nahtfugenmitte 9 entspricht. Bei Tandemschweißköpfen mit zwei unabhängig voneinander regelbaren, aber fix zueinander angeordneten Brenneinheiten ist dies nicht ohne weiteres möglich. Um eine automatische Nahtverfolgung mittels einer Pendelbewegung umsetzen zu können, könnten die beiden Schweißdrähte 6 beispielsweis "hintereinander" angeordnet werden, wobei die Verbindungslinie 16 der beiden Schweißdrahtenden 6, 6` im Wesentlichen parallel zur Nahtfuge 3 angeordnet sind.

Dann wird lediglich das Stromsignal (oder der Widerstand) des vorderen, führenden Schweißdrahts 6 ausgewertet, wobei die Regelung analog zum Einzeldrahtverfahren erfolgen kann. Eine Ausrichtung der beiden Brennereinheiten "hintereinander", d.h. parallel zur Nahtfuge 3 (Schweißkopfwinkel ϕ=0), ist jedoch oftmals nicht die optimale Ausrichtung und es könnten sich mit einer schrägen und queren Anordnung bessere Schweißergebnisse erzielen lassen. Sobald jedoch der Tandemschweißkopf 2 so angeordnet ist, dass der Schweißkopfwinkel ϕ zwischen der Verbindungslinie 16 zwischen den Brennereinheiten 4, 4`und einer zur Nahtfuge 3 parallelen Linie L (siehe Fig.1) einen nicht mehr vernachlässigbaren Wert erreicht (beispielsweise ≥ 10°), funktioniert dieses Verfahren nicht mehr zuverlässig, da nur mehr der führende Schweißdraht 6 exakt auf die Nahtfugenmitte 9 ausgerichtet ist und der nachfolgende Schweißdraht 6' bereits einen erheblichen Abstand zu dieser Nahtfugenmitte (zu einer Seite hin) aufweist.

Gemäß der gegenständlichen Offenbarung wird daher ein anderes Verfahren vorgeschlagen, das auch angewendet werden kann, wenn der Tandemschweißkopf 2 unter einem größeren Schweißkopfwinkel ϕ zum Verlauf der Nahtfuge 3 angeordnet ist. Beispielsweise kann dabei zwischen der Verbindungslinie 16 und der zur Nahtfuge 3 parallelen Linie L ein Schweißkopfwinkel ϕ von 10° bis 170° vorgesehen sein. Das Erfordernis einer Pendelbewegung entlang der y-Achse soll dabei vermieden werden, sodass die erzielbaren Schweißgeschwindigkeiten erheblich erhöht und die Vorteile des Tandemschweißens vollständig ausgenutzt werden können.

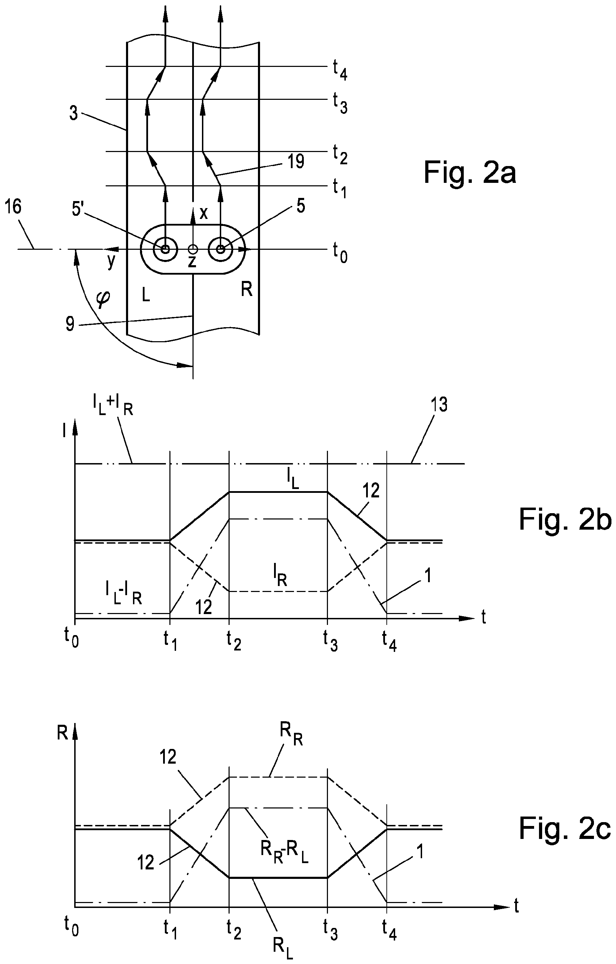

Unter Bezugnahme auf die Fig. 2a bis 2c wird nun ein Verfahren zur Erstellung eines Horizontalregelsignals 1 beschrieben, mit welchem die Position eines entlang der x-Achse (d.h. parallel zur Nahtfuge 3) bewegten Tandemschweißkopfes 2 in Bezug auf die Nahtfuge 3 exakt geregelt werden kann, wenn die Verbindungslinie 16 zwischen den beiden Brennereinheiten 4, 4' unter einem Schweißkopfwinkel ϕ auf die Nahtfugenmitte 9 angeordnet sind. Der Schweißkopfwinkel ϕ zwischen der Nahtfugenmitte 9 (bzw. in einer räumlichen Darstellung zwischen einer zur Nahtfugenmitte 9 parallelen Linie) und der Verbindungslinie 16 beträgt im in Fig. 2a dargestellten Fall etwa 90° +/- 10°. Es wird jedoch darauf hingewiesen, dass das hierin beschriebene Verfahren auch bei einem anderen Schweißkopfwinkel ϕ, etwa bei einem Schweißkopfwinkel ϕ von 10° bis 170°, beispielsweise etwa 165°, 150°, 135°, 120°, 105°, 75°, 60°, 45°, 30°, 15°, 10° oder einem dazwischenliegenden Schweißkopfwinkel ϕ ausführbar ist, solange die Parameter sicherstellen, dass sich die beiden Spitzen der Brennereinheiten 4, 4' (bzw. die davon ausgehenden Lichtbögen 10, 10') auf gegenüberliegenden Seiten der Nahtfugenmitte 9 befinden. Die Lichtbögen 10, 10' gehen im in Fig. 1 dargestellten Fall von dem jeweiligen Schweißdrahtende 6, 6' aus und münden jeweils in einer Fugenfläche 8, 8' (beziehungsweise in einem Schweißbad 11, dass sich dort bildet).

Fig. 2a zeigt eine schematische Draufsicht auf eine Nahtfuge 3, über der sich ein Tandemschweißkopf 2 entlang einer Trajektorie 19 bewegt. Die Trajektorie 19 definiert eine Bewegung in der x-y-Ebene, d.h. der Abstand des Tandemschweißkopfes 2 zur Werkstückoberfläche 20 bleibt im Wesentlichen unverändert. Ausgehend von der dargestellten Lage des Tandemschweißkopfs 2 (Zeitpunkt t₀) bewegt sich der Tandemschweißkopf 2 zuerst parallel zur x-Achse bis zum Zeitpunkt t₁. Danach bewegt sich der Tandemschweißkopf schräg nach links (d.h. in Richtung der positiven x-Achse und der positiven y-Achse) bis zum Zeitpunkt t₂. Zwischen den Zeitpunkten t₂ und t₃ bewegt sich der Tandemschweißkopf wieder parallel zur x-Achse und zwischen den Zeitpunkten t3 und t4 bewegt sich der Tandemschweißkopf 2 wieder schräg, diesmal in Richtung der positiven x-Achse und der negativen y-Achse. Ab dem Zeitpunkt t₄ hat der Schweißkopf wiederum die Nahtfugenmitte 9 erreicht und bewegt sich danach wiederum entlang der Nahtfuge 3.

Sobald sich der Tandemschweißkopf 2 aus seiner mittigen Position bewegt (wie etwa zwischen den dargestellten Zeitpunkten t₁ und t₄) verringert sich der Brennerabstand 7' des nach außen wandernden Schweißdrahts 5' (in Fig. 2a links) und der Schweißstrom I_{L} dieser Seite steigt an. Die andere Seite, d.h. die rechte Brennereinheit 4, wandert näher zur Nahtfugenmitte 9, wobei sich der Brennerabstand 7 zwischen dem rechten Schweißdraht 5 und der der Fugenfläche 8 vergrößert. Demgemäß fällt der Schweißstrom I_{R} dieser Seite ab. Sobald eine Abweichung von der mittigen Position auftritt, führt dies dazu, dass sich der Wert der Differenz I_{L}-I_{R} des linken und des rechten Schweißstroms I_{L},I_{R} ändert. Die Differenz I_{L}-I_{R} kann somit von einer Regeleinheit als Horizontalregelsignal 1 verwendet werden. Die Regeleinheit (z.B. die in Fig. 4 schematisch dargestellte Regeleinheit 22) kann somit das Horizontalregelsignal 1 beispielsweise als Rückführung eines Regelkreises verwenden, der die horizontale Positionierung des Schweißkopfes (d.h. die Positionierung in Bezug auf eine quer zur Nahtfugenmitte 9 verlaufende Achse) regelt. Wie dies in den Figuren dargestellt ist, erhält man bei einer Abweichung nach links ein positives Signal und bei einer Abweichung nach rechts ein negatives, vorausgesetzt, dass die Referenz gleich Null ist. Die Referenz kann natürlich ein beliebiger vorgegebener oder gemessener Wert sein, daher entspricht die Abweichung einer positiven oder negativen Abweichung von der Referenz.

In analoger Weise können auch die Schweißwiderstände R_{R} und R_{L} ermittelt und zur Bildung eines Horizontalregelsignals 1 verwendet werden, wie dies in Fig. 2c beispielhaft dargestellt ist. Auch die Differenz der Spannungen zwischen der ersten Brennereinheit 4 und der zweiten Brennereinheit 4` kann auf analoge Weise gemessen und zur Ermittlung des Horizontalregelsignals 1 verwendet werden.

In Fig. 2a-c sind sowohl die Nahtfuge 3 in Fig. 2a, als auch die abgeleiteten Signale in Fig. 2b und 2c jeweils symmetrisch dargestellt. Es ist jedoch auch ohne großen Aufwand möglich, das gegenständliche Verfahren bei unsymmetrischen Anwendungen bzw. Einstellparameter zu verwenden. Beispielsweise können die beiden Brennereinheiten zwar symmetrisch positioniert sein, aber mit einem unterschiedlichen Stickout betrieben werden. In dem Fall ist stets eine Differenz vorhanden, die genullt und gegebenenfalls mit einem Korrekturfaktor korrigiert werden muss, da ansonsten der Roboter in einer Richtung abdriften würde. Auch bei asymmetrischer Positionierung und/oder asymmetrischer Nahtgeometrie kann eine Nullung und/oder Korrektur erforderlich sein. Es liegt im Können des Durchschnittsfachmanns, bei Kenntnis der hierin offenbarten Lehren diese auf solche asymmetrischen Fälle anzuwenden. Unter dem Stickout ist bekanntermaßen die aus einem Kontaktrohr oder einer (Schutzgas-)Gasdüse einer Brennereinheit 4, 4` ragende freie Drahtlänge eines Schweißdrahtes 5, 5' zu verstehen, also der Abstand zwischen dem jeweiligen Schweißdrahtende 6, 6' und dem jeweiligen Kontaktrohr oder der Gasdüse.

Die Strom-, Widerstands- und Spannungssignale, sowie davon abgeleitete Werte werden im Zusammenhang mit der gegenständlichen Offenbarung allgemein und nicht einschränkend als erste und zweite Messsignale 12, 12' bezeichnet. Eine Anpassung der hierin offenbarten Lehren auf jeweils andere Messsignale 12 liegt im Können des Durchschnittsfachmanns.

Unter Bezugnahme auf Fig. 3a und 3b wird im Folgenden ein Verfahren zur Ermittlung eines Vertikalregelsignals 13 beschrieben. Fig. 3a zeigt einen Verlauf einer Bewegung eines

Tandemschweißkopfs 2, der entlang einer Nahtfuge 3 geführt wird. Der Tandemschweißkopf 2 ist in drei zeitlich aufeinanderfolgenden Positionen, t₀, t₁ und t₂ in einer Schnittansicht dargestellt, wobei die Schnittachse parallel zur Nahtfugenmitte 9 geführt ist. Der Tandemschweißkopf 2 ist quer zur Nahtfugenmitte 9, d.h. unter einem Schweißkopfwinkel ϕ von 90° darauf, angeordnet, wobei in der Schnittansicht nur die hinter der Bildebene angeordnete Brennereinheit 4 zu sehen ist. Zwischen den Zeitpunkten t₀ und t₁ bewegt sich der Tandemschweißkopf 2 parallel zur Nahtfuge 3, wobei der Abstand zur Fugenfläche 8 konstant bleibt. Zwischen den Zeitpunkten t1 und t2 entfernt sich der Tandemschweißkopf 2 von der Nahtfuge 3, wobei der Brennerabstand 7 (die im Wesentlichen der Länge des Lichtbogens 10 plus der freien Drahtlänge (bzw. Stickout) entspricht) größer wird. Nach dem Zeitpunkt t2 verläuft die weitere Bewegung wieder parallel zur Nahtfuge 3.

Fig. 3b illustriert die Messsignale 12, die bei solch einem Bewegungsablauf für die beiden Brennereinheiten 4, 4' aufgezeichnet werden im Hinblick auf die Schweißströme I_{R} und I_{L}. Es ist zu erkennen, dass die Differenz I_{L}-I_{R} der Schweißströme (dies entspricht dem zuvor beschriebenen Horizontalregelsignal 1) konstant bleibt. Dies entspricht der Annahme, dass während der Bewegung des Tandemschweißkopfes 2 kein horizontaler Versatz auftritt. Die Summe I_{L}+I_{R} der beiden Schweißströme hingegen verändert sich jedoch während des "Abhebens" des Tandemschweißkopfes 2, d.h. während dieser eine vertikalen Bewegung ausführt. Im dargestellten Fall nimmt die Summe der beiden Schweißströme ab, was einer Verlängerung der Lichtbögen oder einer Zunahme des Schweißwiderstandes entspricht.

Die Summe I_{L}+I_{R} kann somit von einer Regeleinheit 22 als Vertikalregelsignal 13 verwendet werden. Die Regeleinheit 22 kann somit das Vertikalregelsignal 13 beispielsweise als Rückführung eines Regelkreises verwenden, der die vertikale Positionierung des Schweißkopfes (d.h. die Positionierung in Bezug auf eine in der Nahtfugenmitte 9 liegende, quer zur Werkstückoberfläche 20 verlaufende Achse, also die Vertikalachse z) regelt. Anstelle der Summe I_{L}+I_{R} der beiden Schweißströme kann auch nur ein einzelner Schweißstrom I_{L} oder I_{R} einer Seite zur Ermittlung eines Vertikalregelsignals ausgewertet werden.

Der Vollständigkeit halber sei an dieser Stelle erwähnt, dass bei der Verwendung eines Tandemschweißkopfs 2 mit mehr als zwei Brennereinheiten beispielsweise zwei Brennereinheiten zur Ermittlung des Horizontalregelsignals 1 und entsprechend für die horizontale Regelung der der Position des Tandemschweißkopfes 2 verwendet werden können und eine dritte Brennereinheit zur Ermittlung des Vertikalregelsignals 13 und entsprechend für die vertikale Regelung der Position des Tandemschweißkopfes 2 verwendet werden können. Dadurch kann eine gleichzeitige horizontale und vertikale Regelung erfolgen.

Fig. 4 zeigt eine schematische Darstellung eines Schweißverfahrens zur Herstellung einer Schweißnaht 14 entlang einer gekrümmt verlaufenden Nahtfuge 3 mit einem Tandemschweißkopf 2. Der Tandemschweißkopf 2 ist in einer schematisierten Draufsicht dargestellt und wird so entlang der Nahtfuge 3 geführt, dass die Verbindungslinie zwischen den beiden Schweißdrahtenden stets im Wesentlichen normal auf die Nahtfugenmitte 9 ausgerichtet ist. (Dies ist jeweils auf eine Projektion auf die Werkstückoberfläche 20 bezogen, bei gekrümmten Werkstückoberflächen auf eine Tangentialebene der Werkstückoberfläche 20 im Bereich des Tandemschweißkopfes 2).

Der Tandemschweißkopf 2 kann beispielsweise mithilfe eines Roboterarms (nicht dargestellt) oder einer anderen geeigneten Antriebsvorrichtung bewegt werden. Die Antriebsvorrichtung des Tandemschweißkopfes 2 weist eine Schweißkopfsteuerung 15 auf, über die die Bewegung des Tandemschweißkopfes 2 gesteuert und geregelt wird. Die Schweißkopfsteuerung 15 umfasst dazu eine Regeleinheit 22 und eine Steuereinheit 21. Die Steuereinheit 21 steuert die Antriebsvorrichtung so, dass sich der Tandemschweißkopf 2 gemäß einer definierten Bahn entlang der Nahtfuge 3 bewegt. Da es bei dieser Steuerung jedoch zu Maßabweichungen hinsichtlich der exakten Positionierung des Tandemschweißkopfes 2 kommen kann, ist weiters eine Regeleinheit 22 in der Schweißkopfsteuerung 15 vorgesehen, welches eine Feinregelung der Position des Tandemschweißkopfes 2 anhand von Regelsignalen vornimmt.

Die Regelung gleicht dabei auch Abweichungen von der optimalen Position aus, falls die programmierte Bahn von der realen Bahn abweicht, beispielsweise aufgrund von Bauteiltoleranzen. Gemäß der gegenständlichen Offenbarung umfassen die Regelsignale ein Horizontalregelsignal 1 und gegebenenfalls ein Vertikalregelsignal 13, wie es hierin offenbart ist. Das Horizontalregelsignal 1 dient dazu, den Tandemschweißkopf 2 in einer konstanten Position hinsichtlich der Nahtfugenmitte 9 zu positionieren, d.h. diesen entweder an der Nahtfugenmitte 9 oder in einem bestimmten Abstand dazu zu zentrieren. Das Vertikalregelsignal 1 wird verwendet, um den Abstand des Tandemschweißkopfes 2 zu den Fugenflächen 8, 8' der Nahtfuge 3 konstant zu halten.

Beim Beginn des Schweißverfahrens werden für das Horizontalregelsignal 1 und gegebenenfalls für das Vertikalregelsignal 13 Referenzwerte ermittelt, die im Folgenden als Führungsgrößen für die Regelkreise der Regelung verwendet werden. Die Referenzen können auch fix als Eingabewert in der Steuerung hinterlegt sein oder auch durch eine Probeschweißung automatisch bestimmt werden. Die Ermittlung von Referenzwerten erlaubt beispielsweise auch eine außermittige Führung des Tandemschweißkopfes 2, etwa bei asymmetrischen Nahtfugen oder wenn die beiden Brennereinheiten 4, 4' des Tandemschweißkopfes 2 mit unterschiedlichen Parametern betrieben werden und/oder unterschiedliche Schweißverfahren verwenden, sodass eine außermittige Anordnung vorteilhaft ist.

In der Praxis kommen häufig Schweißprozesse zur Anwendung, bei denen sich der Verlauf des Schweißstroms, Schweißwiderstandes und der Schweißspannung zyklisch verändert. Zu Beispielen solcher Schweißprozesse zählen das Impulslichtbogenschweißen oder das CMT-Verfahren. Bei einigen Schweißprozessen zündet und verlöscht der Lichtbogen während jeder Periode des Zyklus, bei anderen bleibt er im Wesentlichen stabil. Aber auch bei Schweißprozessen, bei denen der Lichtbogen im Wesentlichen stabil brennt, wie etwa beim MIG-/MAG-Schweißen mit Sprühlichtbogen, kann es auch bei konstantem Schweißdrahtvorschub aufgrund des abwechselnden Annäherns des Schweißdrahtendes 6 an die Nahtfuge 3 und das darauffolgende Abtropfen des geschmolzenen Schweißdrahts zu zyklischen Schwankungen der obengenannten Schweißparameter kommen. Die in Fig. 2b, 2c und 3b dargestellten Verläufe der Messsignale 12 sind daher in der Praxis oftmals komplexer.

Um trotz dieser zyklischen Schweißverläufe die Lehren der gegenständlichen Offenbarung auszuführen, werden gemäß der Erfindung die Messsignale 12 jeweils während eines definierten stabilen Zeitintervalls im Schweißzyklus ermittelt . Das definierte stabile Zeitintervall wird vorzugsweise so gewählt, dass es in einem Bereich mit einer möglichst stabilen und gleichbleibenden Signalqualität angeordnet ist. Bevorzugter Weise wird das stabile Zeitintervall in einem Bereich gewählt, in dem der Lichtbogen stabil brennt. Im Falle eines Impulslichtbogenschweißens kann das stabile Zeitintervall beispielsweise am Ende der Pulsphase gewählt werden. Bei einem Kurzschlussschweißprozess kann beispielsweise das stabile Zeitintervall die Kurzschlussphase oder der Zeitpunkt nach Kurzschlussaufbruch sein. Durch die Abstimmung der Zeitpunkte für die Ermittlung der Messsignale 12 auf den jeweiligen Schweißzyklus werden gemäß der Erfindung die gegenständlichen Lehren für Tandemschweißköpfe 2 verwendet , die zwei Brennereinheiten 4, 4' umfassen, die mit unterschiedlichen Schweißprozessen und/oder mit unterschiedlichen Zykluszeiten und/oder mit gleichen Zykluszeiten aber Phasenverschoben betrieben werden. Beispielsweise können die Stromquellen der beiden Brennereinheiten bzw. deren Steuer- oder Regeleinheiten mittels einer Datenverbindung miteinander verbunden sein und untereinander kommunizieren. Dadurch kann die Messdatenerfassung der beiden Brennereinheiten aufeinander abgestimmt und synchronisiert werden.

Bei gleichartig ausgebildeten Brennereinheiten 4, 4' ermöglicht dies zum Beispiel ein vorteilhaftes Schweißverfahren, bei dem die beiden Brennereinheiten 4, 4' mit gegeneinander um 180° phasenverschobenen Schweißzyklen betrieben werden, d.h. die Pulse der rechten und der linken Brennereinheit 4, 4' treten jeweils abwechselnd auf.

Andererseits ermöglicht diese Vorgehensweise, dass in einem Tandemschweißkopf 2 zwei Brennereinheiten 4, 4' kombiniert werden , die gemäß sehr unterschiedlichen Schweißprozessen betrieben werden. Beispielsweise ist es möglich, die erste Brennereinheit 4 als Impulsschweißbrenner auszubilden, und die zweite Brennereinheit 4' als CMT-Schweißbrenner auszubilden oder umgekehrt. Beide Brennereinheiten 4, 4' können dabei mit jeweils optimalen Frequenzen - welche auf die erforderliche Leistung des Schweißprozesses abgestimmt sind - betrieben werden, beispielsweise etwa 10 bis 500 Hz beim Impulsschweißbrenner und 40 bis 250 Hz beim CMT-Schweißbrenner.

Die in den einzelnen Ausgestaltungen und Beispielen angegebenen einzelnen Merkmale und Varianten können (sofern nicht an Ort und Stelle etwas anderes ausgeführt ist) mit denen der anderen Beispiele und Ausgestaltungen frei kombiniert und insbesondere zur Kennzeichnung der Erfindung in den Ansprüchen ohne zwangläufige Mitnahme der anderen Details der jeweiligen Ausgestaltung bzw. des jeweiligen Beispiels im Rahmen der offenbarten Ansprüche verwendet werden.

### Bezugszeichen:

Horizontalregelsignal 1
Tandemschweißkopf 2
Nahtfuge 3
Brennereinheit 4, 4'
Schweißdraht 5, 5'
Schweißdrahtende 6, 6'
Brennerabstand 7, 7'
Fugenfläche 8, 8'
Nahtfugenmitte 9
Lichtbogen 10, 10'
Schweißbad 11
Messsignal 12, 12'
Vertikalregelsignal 13
Schweißnaht 14
Schweißkopfsteuerung 15
Verbindungslinie 16
Werkstück 17
Schweißrichtung 18
Trajektorie 19
Werkstückoberfläche 20
Steuereinheit 21
Regeleinheit 22
Schweißgerät 23, 23'
Stromquelle 24, 24'
Schweißdrahtvorschubeinheit 25, 25'
Steuereinheit 26, 26'
Schweißleitung 27, 27'
Ein-/Ausgabeeinheit 28, 28'
Masseleitung M, M'
Schweißkopfwinkel ϕ

## Patentansprüche

1. Verfahren zur Ermittlung eines Horizontalregelsignals (1) für einen Tandemschweißkopf (2) während der Herstellung einer Schweißnaht, welcher entlang einer Nahtfuge (3) geführt wird und zwei nebeneinander angeordnete Brennereinheiten (4, 4") aufweist, wobei jede Brennereinheit (4, 4') eine Zuführung für einen Schweißdraht (5, 5') aufweist, wobei die erste Brennereinheit (4) mit einem ersten Brennerabstand (7) über einer ersten Fugenfläche (8) an einer ersten Seite einer Nahtfugenmitte (9) der Nahtfuge (3) geführt wird, wobei die zweite Brennereinheit (4') mit einem zweiten Brennerabstand (7') über einer zweiten Fugenfläche (8') an einer zweiten Seite der Nahtfugenmitte (9) geführt wird, wobei ein erster Lichtbogen (10) während eines ersten Schweißzyklus von der ersten Brennereinheit (4) zu der Nahtfuge (3) aufrechterhalten wird, wobei ein zweiter Lichtbogen (10') während eines zweiten Schweißzyklus von der zweiten Brennereinheit (4') zu der Nahtfuge (3) aufrechterhalten wird, wobei für die erste Brennereinheit (4) ein für den ersten Brennerabstand (7) repräsentatives erstes Messsignal (12) ermittelt wird, wobei für die zweite Brennereinheit (4') ein für den zweiten Brennerabstand (7') repräsentatives zweites Messsignal (12') ermittelt wird und wobei die Ermittlung des Horizontalregelsignals (1) das Bilden einer Differenz aus dem ersten Messsignal (12) und dem zweiten Messsignal (12') umfasst, **dadurch gekennzeichnet, dass** der erste Lichtbogen (10) während des ersten Schweißzyklus zeitweise aufrechterhalten wird und der zweite Lichtbogen (10') während des zweiten Schweißzyklus zeitweise aufrechterhalten wird, dass das erste Messsignal (12) während eines definierten stabilen Zeitintervalls im ersten Schweißzyklus ermittelt wird und das zweite Messsignal (12') während eines definierten stabilen Zeitintervalls im zweiten Schweißzyklus ermittelt wird **und dass** die erste Brennereinheit (4) gemäß einem ersten Schweißprozess betrieben wird und die zweite Brennereinheit (4') gemäß einem zweiten Schweißprozess betrieben wird, wobei der erste Schweißprozess und der zweite Schweißprozess unabhängig voneinander ausgewählt sind aus Schutzgasschweißen mit inerten oder aktiven Gasen (etwa MIG/MAG-Schweißen) mit Kurzlichtbogen oder Impulslichtbogen, Cold-Metal-Transfer-Schweißen (CMT-Schweißen) und Wolfram-Inertgas-Schweißen (WIG-Schweißen ), wobei die zwei Brennereinheiten (4, 4') mit unterschiedlichen Schweißprozessen betrieben werden oder sich der erste Schweißzyklus und der zweite Schweißzyklus voneinander unterscheiden.

2. Verfahren nach Anspruch 1, **dadurch gekennzeichnet, dass** der erste Schweißzyklus und der zweite Schweißzyklus mit unterschiedlichen Zykluszeiten oder mit gleichen Zykluszeiten aber Phasenverschoben betrieben werden.

3. Verfahren nach Anspruch 1, **dadurch gekennzeichnet, dass** das erste Messsignal (12) und das zweite Messsignal (12') als ein für den Schweißstrom oder die Schweißspannung oder den Schweißwiderstand der jeweiligen ersten bzw. zweiten Brennereinheit (4,4') repräsentatives Signal ermittelt werden.

4. Verfahren nach einem der Ansprüche 1 bis 3, **dadurch gekennzeichnet, dass** aus dem ersten Messsignal (12) und dem zweiten Messsignal (12') weiters ein Vertikalregelsignal (13) ermittelt wird, wobei die Ermittlung des Vertikalregelsignals (13) das Bilden einer Summe aus dem ersten Messsignal (12) und dem zweiten Messsignal (12') umfasst.

5. Schweißverfahren zum Herstellen einer Schweißnaht (14) entlang einer Nahtfuge (3) mit einem Tandemschweißkopf (2), **dadurch gekennzeichnet, dass** mit einem Verfahren gemäß einem der Ansprüche 1 bis 4 ein Horizontalregelsignal (1) ermittelt und als ein Rückführungssignal einer Regelkomponente einer Schweißkopfsteuerung (15) zur Verfolgung der Nahtfuge (3) verwendet wird.

6. Schweißverfahren nach Anspruch 5, **dadurch gekennzeichnet, dass** der Tandemschweißkopf (2) in einer in Bezug auf die Nahtfugenmitte (9) definierten Position oberhalb einer Tangentialfläche der Werkstückoberfläche (20), in der die Nahtfuge (3) verläuft, angeordnet und entlang der Nahtfuge (3) geführt wird, wobei ein Schweißkopfwinkel (ϕ) zwischen einer Normalprojektion einer gedachte Verbindungslinie (16) durch die beiden Brennereinheiten (4, 4') auf die Tangentialfläche und der Nahtfugenmitte (9) 10° bis 170°beträgt, wobei der Schweißkopfwinkel (ϕ) vorzugsweise etwa 90° +/- 10° beträgt.

7. Schweißvorrichtung, die einen Tandemschweißkopf (2) mit zwei nebeneinander angeordneten Brennereinheiten (4, 4') und zumindest eine Schweißkopfsteuerung (15) aufweist, wobei die Schweißkopfsteuerung (15) eine Steuereinheit (21) eingerichtet zur gesteuerten Führung der Position des Tandemschweißkopfs (2) entlang eines Soll-Verlaufs einer Nahtfuge (3) und eine Regeleinheit (22) eingerichtet zur geregelten Feinpositionierung des Tandemschweißkopfs (2) gegenüber der Ist-Position der Nahtfuge (3) aufweist, und wobei die Regeleinheit (22) ein Horizontalregelsignal (1) verwendet, welches gemäß einem Verfahren nach einem der Ansprüche 1 bis 4 ermittelt wird, **dadurch gekennzeichnet, dass** die erste Brennereinheit (4) gemäß einem ersten Schweißprozess betreibbar ist und die zweite Brennereinheit (4`) gemäß einem zweiten Schweißprozess betreibbar ist, wobei der erste Schweißprozess und der zweite Schweißprozess unabhängig voneinander ausgewählt sind aus Schutzgasschweißen mit inerten oder aktiven Gasen, insbesondere MIG/MAG-Schweißen, mit Kurzlichtbogen, Impulslichtbogen, Cold-Metal-Transfer-Schweißen (CMT-Schweißen) und Wolfram-Inertgas-Schweißen (WIG-Schweißen), wobei die zwei Brennereinheiten (4, 4') mit unterschiedlichen Schweißprozessen betreibbar sind oder sich der erste Schweißzyklus und der zweite Schweißzyklus voneinander unterscheiden.

8. Schweißvorrichtung nach Anspruch 7, **dadurch gekennzeichnet, dass** die Regeleinheit (22) ein Vertikalregelsignal (13) verwendet, welches gemäß einem Verfahren nach Anspruch 4 ermittelt wird.

## Claims

1. Method for determining a horizontal control signal (1) for a tandem welding head (2) during the production of a weld seam, which head is guided along a weld groove (3) and has two torch units (4, 4") arranged next to one another, each torch unit (4, 4') having a feed for a welding wire (5, 5'), the first torch unit (4) being guided with a first torch spacing (7) over a first groove face (8) on a first side of a weld groove center (9) of the weld groove (3), the second torch unit (4') being guided with a second torch spacing (7') over a second groove surface (8') on a second side of the weld groove center (9), a first arc (10) being maintained from the first torch unit (4) to the weld groove (3) during a first welding cycle, a second arc (10') being maintained from the second torch unit (4') to the weld groove (3) during a second welding cycle, a first measurement signal (12) representative of the first torch spacing (7) being determined for the first torch unit (4), a second measurement signal (12') representative of the second torch spacing (7') being determined for the second torch unit (4'), and the determination of the horizontal control signal (1) comprising forming a difference between the first measurement signal (12) and the second measurement signal (12'), **characterized in that** the first arc (10) is intermittently maintained during the first welding cycle and the second arc (10') is intermittently maintained during the second welding cycle, **in that** the first measurement signal (12) is determined during a defined stable time interval in the first welding cycle and the second measurement signal (12') is determined during a defined stable time interval in the second welding cycle, **and in that** the first torch unit (4) is operated according to a first welding process and the second torch unit (4') is operated according to a second welding process, the first welding process and the second welding process being selected independently of one another from gas-shielded-arc welding with inert or active gases (such as MIG/MAG welding) with short arc or pulsed arc, cold metal transfer welding (CMT welding) and tungsten inert gas welding (TIG welding), the two torch units (4, 4') being operated using different welding processes or the first welding cycle and the second welding cycle differing from one another.

2. Method according to claim 1, **characterized in that** the first welding cycle and the second welding cycle are operated with different cycle times or with the same cycle times but out of phase.

3. Method according to claim 1, **characterized in that** the first measurement signal (12) and the second measurement signal (12') are determined as a signal representative of the welding current or the welding voltage or the welding resistance of the first and second torch unit (4, 4'), respectively.

4. Method according to one of claims 1 to 3, **characterized in that** a vertical control signal (13) is furthermore determined from the first measurement signal (12) and the second measurement signal (12'), the determination of the vertical control signal (13) comprising forming a sum of the first measurement signal (12) and the second measurement signal (12').

5. Welding method for producing a weld seam (14) along a weld groove (3) using a tandem welding head (2), **characterized in that** a horizontal control signal (1) is determined using a method according to one of claims 1 to 4 and is used as a feedback signal of a control component of a welding head controller (15) for following the weld groove (3).

6. Welding method according to claim 5, **characterized in that** the tandem welding head (2) is arranged in a position defined in relation to the weld groove center (9) above a tangential face of the workpiece surface (20) in which the weld groove (3) runs, and is guided along the weld groove (3), a welding head angle (ϕ) between a normal projection of an imaginary connecting line (16) through the two torch units (4, 4') onto the tangential face and the weld groove center (9) being 10° to 170°, the welding head angle (ϕ) being preferably approximately 90° +/- 10°.

7. Welding device which has a tandem welding head (2) comprising two torch units (4, 4') arranged next to one another and which has at least one welding head controller (15), the welding head controller (15) having an open-loop control unit (21) configured for the controlled guidance of the position of the tandem welding head (2) in an open-loop manner along a desired course of a weld groove (3) and a closed-loop control unit (22) configured for the controlled fine positioning of the tandem welding head (2) relative to the actual position of the weld groove (3) in a closed-loop manner, and the closed-loop control unit (22) using a horizontal control signal (1) which is determined in accordance with a method according to one of claims 1 to 4, **characterized in that** the first torch unit (4) can be operated according to a first welding process and the second torch unit (4') can be operated according to a second welding process, the first welding process and the second welding process being selected independently of one another from gas-shielded-arc welding with inert or active gases, in particular MIG/MAG welding, short arc or pulsed arc, cold metal transfer welding (CMT welding) and tungsten inert gas welding (TIG welding), it being possible for the two torch units (4, 4') to be operated using different welding processes or the first welding cycle and the second welding cycle differing from one another.

8. Welding device according to claim 7, **characterized in that** the closed-loop control unit (22) uses a vertical control signal (13) which is determined in accordance with a method according to claim 4.

## Revendications

1. Procédé de détermination d'un signal de régulation horizontale (1) pour une tête de soudage en tandem (2) pendant la réalisation d'un joint de soudure, qui est guidée le long d'une jointure (3) et qui présente deux unités de torche (4, 4") disposées l'une à côté de l'autre, chaque unité de torche (4, 4`) présentant une alimentation pour un fil à souder (5, 5'), la première unité de torche (4) étant guidée à une première distance de torche (7) au-dessus d'une première surface (8) de joint au niveau d'un premier côté d'un centre (9) de jointure de la jointure (3), la seconde unité de torche (4`) étant guidée à une seconde distance de torche (7`) au-dessus d'une seconde surface (8`) de joint au niveau d'un second côté du centre (9) de jointure, un premier arc électrique (10) étant maintenu pendant un premier cycle de soudage de la première unité de torche (4) vers la jointure (3), un second arc électrique (10') étant maintenu pendant un second cycle de soudage de la seconde unité de torche (4`) vers la jointure (3), un premier signal de mesure (12) représentatif de la première distance de torche (7) étant déterminé pour la première unité de torche (4), un second signal de mesure (12`) représentatif de la seconde distance de torche (7') étant déterminé pour la seconde unité de torche (4`) et la détermination du signal de régulation horizontale (1) comprenant la formation d'une différence entre le premier signal de mesure (12) et le second signal de mesure (12'), **caractérisé en ce que** le premier arc électrique (10) est maintenu temporairement pendant le premier cycle de soudage et le second arc électrique (10') est maintenu temporairement pendant le second cycle de soudage, **en ce que** le premier signal de mesure (12) est déterminé pendant un intervalle de temps stable défini dans le premier cycle de soudage et le second signal de mesure (12`) est déterminé pendant un intervalle de temps stable défini dans le second cycle de soudage et **en ce que** la première unité de torche (4) fonctionne selon un premier processus de soudage et la seconde unité de torche (4`) fonctionne selon un second processus de soudage, le premier processus de soudage et le second processus de soudage étant choisis indépendamment l'un de l'autre parmi le soudage sous gaz de protection avec des gaz inertes ou actifs (par exemple le soudage MIG/MAG) à arc électrique court ou à arc électrique pulsé, le soudage par transfert de métal à froid (soudage CMT) et le soudage au tungstène sous gaz inerte (soudage TIG), les deux unités de torche (4, 4`) fonctionnant avec des procédés de soudage différents ou le premier cycle de soudage et le second cycle de soudage étant différents l'un de l'autre.

2. Procédé selon la revendication 1, **caractérisé en ce que** le premier cycle de soudage et le second cycle de soudage fonctionnent avec des temps de cycle différents ou avec des temps de cycle identiques mais décalés en phase.

3. Procédé selon la revendication 1, **caractérisé en ce que** le premier signal de mesure (12) et le second signal de mesure (12`) sont déterminés comme un signal représentatif du courant de soudage ou de la tension de soudage ou de la résistance de soudage de la première ou de la seconde unité de torche (4, 4`) respective.

4. Procédé selon l'une des revendications 1 à 3, **caractérisé en ce qu'**un signal de régulation verticale (13) est en outre déterminé à partir du premier signal de mesure (12) et du second signal de mesure (12'), la détermination du signal de régulation verticale (13) comprenant la formation d'une somme du premier signal de mesure (12) et du second signal de mesure (12').

5. Procédé de soudage destiné à réaliser un joint de soudure (14) le long d'une jointure (3) à l'aide d'une tête de soudage en tandem (2),
**caractérisé en ce qu'**un signal de régulation horizontale (1) est déterminé à l'aide d'un procédé selon l'une des revendications 1 à 4 et utilisé comme signal de rétroaction d'un composant de régulation d'une commande (15) de tête de soudage pour suivre la jointure (3).

6. Procédé de soudage selon la revendication 5, **caractérisé en ce que** la tête de soudage en tandem (2) est disposée dans une position définie par rapport au centre (9) de jointure au-dessus d'une surface tangentielle de la surface (20) de la pièce dans laquelle s'étend la jointure (3) et est guidée le long de la jointure (3), un angle (ϕ) de tête de soudage entre une projection normale d'une ligne de jonction imaginaire (16) passant par les deux unités de torche (4, 4`) sur la surface tangentielle et le centre (9) de jointure étant de 10° à 170°, l'angle (ϕ) de tête de soudage étant de préférence d'environ 90° +/- 10°.

7. Dispositif de soudage, qui présente une tête de soudage en tandem (2) comportant deux unités de torche (4, 4`) disposées l'une à côté de l'autre et au moins une commande (15) de tête de soudage, la commande (15) de tête de soudage présentant une unité de commande (21) conçue pour le guidage commandé de la position de la tête de soudage en tandem (2) le long d'un tracé de consigne d'une jointure (3) et une unité de régulation (22) conçue pour le positionnement fin régulé de la tête de soudage en tandem (2) par rapport à la position réelle de la jointure (3) et l'unité de régulation (22) utilisant un signal de régulation horizontale (1) qui est déterminé selon un procédé selon l'une des revendications 1 à 4, **caractérisé en ce que** la première unité de torche (4) peut fonctionner selon un premier processus de soudage et la seconde unité de torche (4`) peut fonctionner selon un second processus de soudage, le premier processus de soudage et le second processus de soudage étant choisis indépendamment l'un de l'autre parmi le soudage sous gaz de protection avec des gaz inertes ou actifs, en particulier le soudage MIG/MAG, à arc électrique court, à arc électrique pulsé, le soudage par transfert de métal à froid (soudage CMT) et le soudage au tungstène sous gaz inerte (soudage TIG), les deux unités de torche (4, 4`) pouvant fonctionner selon des procédés de soudage différents ou le premier cycle de soudage et le second cycle de soudage étant différents l'un de l'autre.

8. Dispositif de soudage selon la revendication 7, **caractérisé en ce que** l'unité de régulation (22) utilise un signal de régulation verticale (13) qui est déterminé selon un procédé selon la revendication 4.
